# EUROPÄISCHE PATENTSCHRIFT

(11) **EP 1 438 887 B1**
(45) Veröffentlichungstag und Bekanntmachung des Hinweises auf die Patenterteilung: **21.12.2005**
(21) Anmeldenummer: 04009450.0
(22) Anmeldetag: 17.09.1996
(51) Int. Cl.: A01F 12/40

(54) **Strohhäcksler zum zerkleinern von Halmgut hinter den Kornabscheideeinrichtungen eines Mähdreschers**
Device for chopping the stalks after the ears of corn have been cut off in a combine harvester
Hache-paille pour broyer la paille derrière les dispositifs de séparation des grains d'une moissonneuse batteuse

(30) Priorität: 25.09.1995 DE 19535175
(43) Veröffentlichungstag der Anmeldung: 21.07.2004
(62) Teilanmeldung aus: 96932545.5
(73) Patentinhaber: BISO B.V., NL-4707 BX Roosendaal (NL)
(72) Erfinder: Jakobi, Wilhelm, 88521 Ertlingen (DE)
(74) Vertreter: Zinnecker, Armin

(56) Entgegenhaltungen:
- EP-A- 0 166 116
- EP-A- 0 479 329
- EP-A- 0 538 599
- BE-A- 558 601
- DE-A- 2 805 208
- FR-A- 2 479 648
- FR-A- 2 569 520
- US-A- 2 626 159
- US-A- 2 950 747
- US-A- 3 350 017

## Beschreibung

Gegenstand der Erfindung ist ein Strohhäcksler, der hinter den Kornabscheideeinrichtungen eines Mähdreschers angeordnet ist und dessen Trennorgane das von den Schüttlern herabfallende Halmgut in kurze Stücke zerteilen, die durch einen Verteilerkasten ausgetragen und verteilt über die Schnittbreite auf dem Boden abgelegt werden.

Strohhäcksler üblicher Bauart haben allgemein auf einem Trommelrohr frei beweglich gelagerte Schneidmesser, die das herabfallende Halmgut erfassen und gegen feststehende Gegenmesser schlagen. Dabei wird das Halmgut unter verbrauchen einer großen Leistung zerschlagen.

Des weiteren hat diese Konstruktionsweise den Nachteil, daß etwa in Längsrichtung über die Schüttler gehendes Halmgut nur unzulänglich zertrennt wird.

Das ist insofern schlecht, weil durch neue Züchtungen das Stroh immer kürzer und stabiler wird und deshalb in größerer Menge in Längsrichtung über die Schüttler geht.

Längeres Stroh in größerem Anteil wird hinter der Verteilerhaube jedoch nur unzureichend verteilt, es kann schlecht in den Ackerboden eingearbeitet werden und es verrottet schlecht.

Aus der EP-A-0 538 599 ist ein Strohhäcksler nach dem Oberbegriff des Anspruchs 1 bekannt.

Die Aufgabe der Erfindung besteht darin, gegenüber bekannten Ausführungsarten den Leistungsbedarf des Strohhäckslers zu verringern, das ausgeschüttelte Stroh, egal ob es in Querlage oder in Längsrichtung vom Schüttler fällt, in gleichmäßige kurze Stücke zu schneiden und zerfasern und mit einem kräftigen Luftstrom über die ganze Schnittbreite auf dem Ackerboden gleichmäßig zu verteilen. Dabei sollen im Halmgut mitgeführte Fremdkörper den Häcksler passieren ohne ihn zu beschädigen oder zu zerstören.

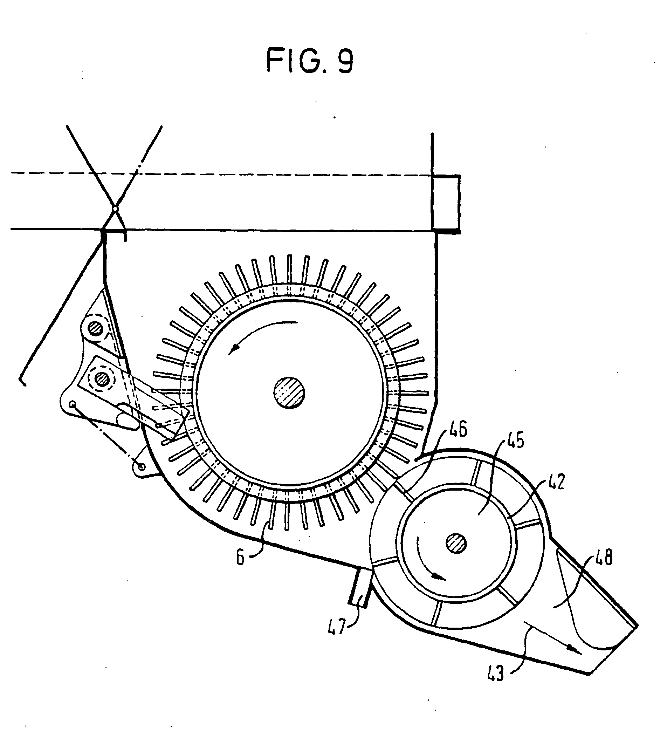

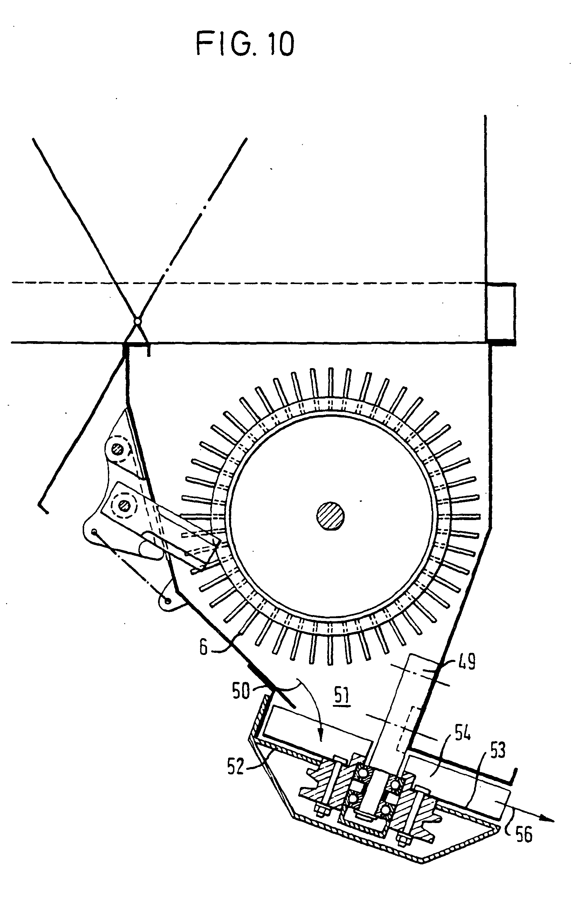

Erfindungsgemäß wird diese Aufgabe durch die Merkmale des Anspruchs 1 gelöst. Für schwieriger zu häckselndes Halmgut und wenn viel längsgerichtetes Halmgut zu häckseln ist, wird, wie in Fig. 9 und Fig. 10 dargestellt, der Querschneideeinrichtung wahlweise ein einfacher Trommelhäcksler oder mehrere Scheibenradhäcksler nachgeordnet, um das der Länge nach durch den Häcksler gehende Halmgut zu kürzen.

Der Trommelhäcksler entspricht in Konstruktion und Wirkungsweise der üblichen Bauweise mit quer über die Trommelbreite gehenden Häckselleisten. In einer besonderen Gestaltung gehen die Schlagleisten schraubenförmig quer von einer Seite zur anderen, wobei der Umschlingungswinkel größer als 360 Grad ist. Dadurch bleiben die Häckselleisten praktisch immer im Eingriff. Die Höhe der Häckselleisten entspricht dabei etwa der Länge, auf die das Halmgut gekürzt werden soll. Dem Trommelhäcksler ist zur Unterstützung des Auswurfes ein Radialgebläse zugeordnet.

Werden Scheibenradhäcksler der Querschneideinrichtung nachgeordnet, sind davon mindestens zwei vorgesehen, damit das gehäckselte Halmgut durch die Verteilerhaube gleichmäßig nach beiden Seiten verteilt werden kann. Die Höhe der Häckselleisten entspricht auch hier etwa der Länge, auf die das Halmgut gekürzt werden soll. Der Antrieb der Scheibenradhäcksler erfolgt, wie näher nicht dargestellt, mit Riementrieben oder mit Kegelgetrieben.

Anstelle der üblichen, frei beweglich auf einem Trommelrohr gelagerten Häckselmessern sind auf einer Trommelwalze starr befestigte, an ihrer Stirnseite mit einer agressiven, hinterschliffenen Verzahnung versehene Mitnehmer angebracht, die das zu trennende Halmgut erfassen und in einem relativ dünnen Halmgutschleier in einem ziehenden Scnnitt über am Häckselboden feststehende Häckselmesser mit scharfer Schneidkante ziehen, wobei das Halmgut mit relativ geringem Kraftaufwand zertrennt wird.

Die Breite der Mitnehmer entspricht dabei annähernd der Breite, auf die querliegendes Halmgut geschnitten werden soll.

Die Mitnehmer sind, gleichmäßig verteilt in einer beliebigen Anzahl Reihen, auf dem Umfang einer Trommelwalze spiralförmig angeordnet, wobei jeweils der erste Mitnehmer einer Reihe in Längsrichtung der Trommelwalze auf gleicher Höhe liegt wie der letzte Mitnehmer einer Reihe auf der gegenüber liegenden Seite.

Durch diese Bauweise durchläuft das Halmgut in einem relativ dünnen Schleier den Häcksler, wobei praktisch jeweils nur zwei Mitnehmer kraftschlüssig im Eingriff mit dem zu trennenden Halmgut sind, das durch die Häckselmesser getrennt wird.

Daraus resultiert ein konstantes, relativ geringes Drehmoment und dem entsprechend eine geringe konstante Leistungs-Anforderung.

Dabei können in einer Reihe Mitnehmer an Mitnehmer liegen mit jeweils einem Spalt dazwischen, durch den das feststehende Häckselmesser geht. Es kann in einer Reihe jedoch auch jeweils ein Mitnehmer ausgelassen werden, womit die Anzahl Schnitte und damit der Leistungsbedarf verringert wird.

Ein besonderer Vorteil der breiten Mitnehmer besteht noch darin, daß sie zunächst um den Trommelmantel einen kräftigen Wind erzeugen und dann durch die schaufelförmige Ausbildung das gehäckselte Halmgut sicher austragen.

Die feststehenden Häckselmesser sind paarweise an schwenkbaren Messerträgern befestigt, die an einem außerhalb des Häckselbodens liegenden, zu diesem etwa parallel verlaufenden Messerboden gelagert sind. Die Messerträger sind dabei mit Anschlägen versehen, die mittels Federn gegen den Messerboden gedrückt werden.

Die Häckselmesser selbst ragen durch Schlitze im Messerboden und im Häckselboden in den Häckselkasten hinein. Wird ein harter Fremdkörper von den Mitnehmern erfasst, weichen die Häckselmesser nach außen aus, womit der Fremdkörper die Schneideinrichtung passieren kann, ohne diese zu beschädigen. Der Messerboden kann mit den Messerträgern und den Häckselmessern als eine Einheit so weit zurückgeschwenkt werden, daß sich die Häckselmesser außerhalb des Häckseiraumes befinden. Wird gleichzeitig der Verteilerkasten weggeschwenkt, ist es möglich, das Halmgut über die Häckseltrommel ungeschnitten im Schwad abzulegen. Dabei wird das Halmgut geknickt und zerfassert und eignet sich besser in der Weiterverwendung. Durch vorstehend aufgezeigte Querschneid-Einrichtung wird vorwiegend quer durch den Häcksler gehendes Halmgut getrennt.

Ein weiteres Merkmal der Erfindung ist, daß der Querschneid-Einrichtung wahlweise verschiedene Schneideinrichtungen nachgeordnet sind, mittels derer in Längsrichtung durch den Häcksler gehendes Halmgut in kurze Stücke zertrennt wird. In der einfachsten Ausführung sind dazu unterhalb der Häckselmesser am Häckselboden drehbar gelagerte Gegenschneidplatten angeordnet, die an ihrer Stirnseite hinterschliffen verzahnt sind, wobei die Verzahnung der Gegenschneidplatte mit der Verzahnung der Mitnehmerplatten im Profil übereinstimmt und in diese bis auf einen allseitig parallelen Abstand von weniger als 3mm hineinragt.

Dadurch werden Strohhalme, die der Länge nach durch den Häcksler gehen an der Stelle, an der eine Mitnehmerplatte eine Gegenschneidplatte passiert, getrennt und damit in der Länge gestückelt.

Diese Gegenleisten sind in der Breite über die Häckseltrommel in Segmente aufgeteilt, wobei jedes Segment einzeln gefedert im Eingriff zu den Mitnehmern gehalten wird. Passiert ein harter Fremdkörper den Häcksler, weichen diese Segmente entsprechend ihrer Breite nach hinten aus.

Damit das aus dem Verteilerkasten ausgetragene, zerkleinerte Halmgut sicher über die ganze Schnittbreite verteilt wird, sind an den beiden Enden der Trommeiwalze, fest verbunden mit dieser, Radialgebläse angeordnet, die seitlich vom Häckselgehäuse Luft ansaugen und in den Verteilerkasten blasen.

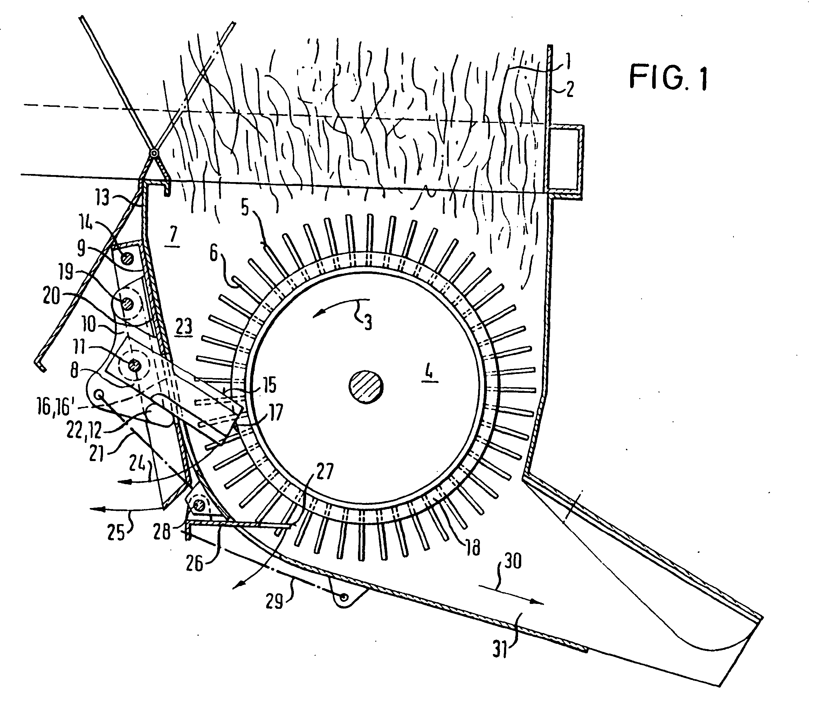

Die Figuren 1 bis 8 zeigen zur Erlaüterung einen Strohhäcksler der nicht gemäß der Erfindung gestaltet ist. Die Figuren 9 und 10 zeigen einen Strohhäcksler gemäß der Erfindung.

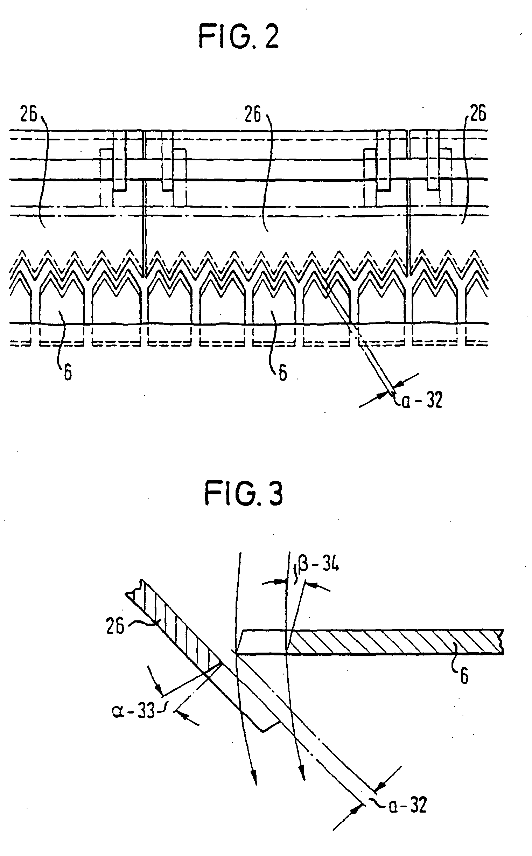

Dabei zeigt:
Fig.1
   einen Längsschnitt durch einen Strohhäcksler mit einer Halmgut-Querschneideeinrichtung und nachgeordneter Trenneinrichtung für längsgerichtet durch den Häcksler gehendes Halmgut mittels Gegenschneidplatten,
Fig. 2
   eine Draufsicht auf die Trenneinrichtung nach Fig. 2,
Fig. 3
   wie die Schneidplatten und die Gegenleisten hinterschnitten sind,
Fig. 4
   einen Längsschnitt durch die Häckseltrommel, aus dem die Anordnung der Mitnehmerpiatten sowie der Axialgläse ersichtlich ist,
Fig. 5
   einen Querschnitt durch die Häckseltrommel, aus dem die Zuordnung der Mitnehmerplatten zueinander ersichtlich ist,
Fig. 6
   einen Querschnitt durch ein Axialgebläse.
Fig. 7
   eine Ansicht auf die Messerträger,
Fig. 8
   eine Ansicht auf die Mitnehmerplatten,
Fig. 9
   einen Längsschnitt durch einen erfindungsgemäßen Strohhäcksler mit einer Halgut-Querschneideinrichtung und nachgeordneter Trenneinrichtung für längsgerichtet durchgehendes Halmgut mittels Trommelhäcksler,
Fig. 10
   einen Längsschnitt durch einen weiteren erfindungsgemäßen Strohhäcksler mit einer Halgut-Querschneideinrichtung und nachgeordneter Trenneinrichtung für längsgerichtet durchgehendes Halmgut mittels Scheibenrad-Häcksler.

Fig. 1 zeigt einen Querschnitt durch einen Strohhäcksler, bei dem der Halmgut-Querschneideinrichtung eine unterhalb dieser liegende Halm-Längsschneideeinrichtung angeordnet ist.

Dabei fällt das zu häckselnde Halmgut (1) aus einer Strohauslauf-Haube (2) auf die sich in Pfeilrichtung (3) drehende Häckseltrommel (4). Dabei wird das Halmgut von an der Stirnseite (5) hinterschliffen gezahnten Mitnehmerplatten (6) erfasst und in den Einlaufraum (7) gefördert. Die Mitnehmerplatten ziehen das Halmgut von hier über Häckselmesser (8), die an der Außenseite eines Messerbodens (9) auf Trägem (10) mittels Schrauben (11) paarweise starr befestigt und nach unten durch Anschläge (12) begrenzt sind.

Der Messerboden (9) ist am Häckslerboden (13) in Lagern (14) schwenkbar gelagert. Die Häckselmesser ragen mit ihrem vorderen Ende, das eine scharfe Schneidkante (15) hat, durch Schlitze (16), (16') im Messerboden (9) und im Häckselboden (13) zwischen jeweils zwei Mitnehmerplatten (6) mit ihrem vorderen Ende (17) bis an den äußeren Durchmesser der Trommelwalze (18).

Die Träger (10) sind auf Bolzen (19) gelagert, die wiederum in Lagerplatten (20) gelagert sind. Dabei werden die Träger durch Federzug (21) bis zu einem Anschlag (22) nach unten gezogen, wobei der in den Häckselraum (23) zwischen die Mitnehmerpiatten ragende Teil der Häckselmesser nach oben gedrückt wird. Gelangt ein näher nicht dargestellter harter Fremdkörper in den Einlaufraum (7) und wird dort von den Mitnehmerplatten erfasst, weichen die Häckselmesser nach hinten in Pfeilrichtung (24) aus. Unabhängig hiervon kann der Messerboden (9) mit sämtlichen Häckseimessern um den Schwenkpunkt (14) in Pfeilrichtung (25) ausweichen.

Unterhalb der Häckselmesser sind am Häckselboden (13) Gegenschneidplatten (26) angeordnet, die an ihrer Stirnseite (27) hinterschliffen verzahnt sind, wobei die Ver zahnung im Profil mit der Verzahnung an der Stirnseite der Mitnehmerpiatte übereinstimmt und beide Verzahnungen bis auf einen allseitig parallelen Abstand von weniger als 3mm übereinstimmen. Die Gegenschneidplatten sind auf Bolzen (28) schwenkbar gelagert und werden mittels Federzug (29) gegen einen näher nicht dargestellten, einstellbaren Anschlag gedrückt. Die Gegenschneidplatten sind in mehrere Segmente aufgeteilt, von denen jedes einzeln beim Auftreffen eines harten Fremdkörpers für sich ausweichen kann.

Das in Querrichtung und in Längsrichtung gehäckselte Halmgut wird dann in Pfeilrichtung (30) nach hinten aus der Verteilerhaube (31) ausgetragen.

Fig. 2 zeigt eine Ansicht auf die Gegenschneidplatten (26) im Eingriff mit den Mitnehmerplatten (6). Dabei ist die segmentmäßige Aufteilung der Gegenschneidplatten und die profilmäßige Übereinstimmung von Mitnehmerplatte und Gegenschneidplatte ersichtlich. Dabei greifen die Stirnseiten (5), (27), von Gegenschneidplatte und Mitnehmerpiatte zahnförmig parallel ineinander in einem Abstand a (32) kleiner als 3mm.

Fig. 3 zeigt die Hinterschnitt-Winkel a(33) und β (34) von Mitnehmerplatten und Gegenschneidplatten. Die Hinterschnitt-Winkel sind dabei größer 3 Grad. Beide Winkel sind je nach Bedarf gleich groß oder unterschiedlich.

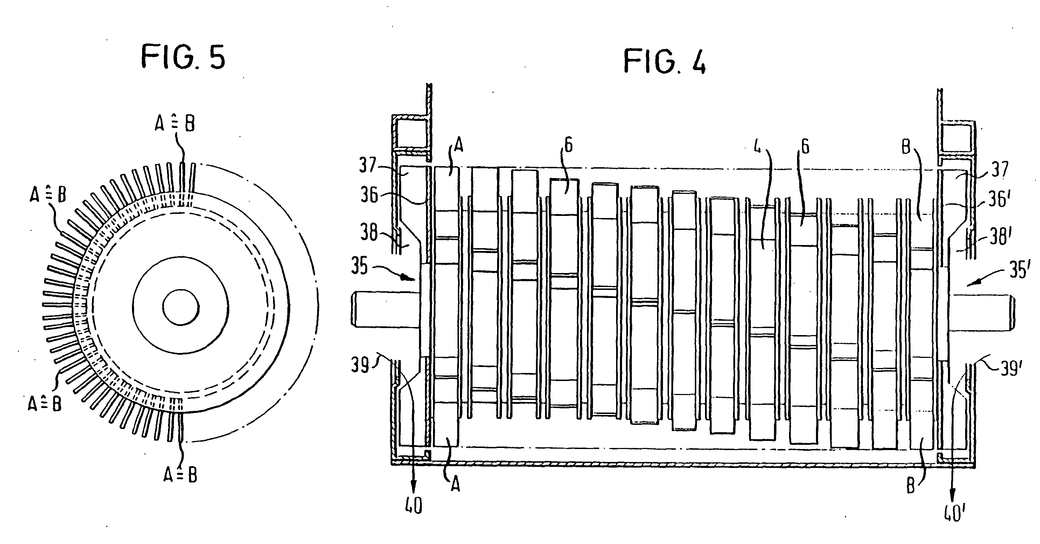

Fig. 4 zeigt einen Längsschnitt durch die Häckseltrommel (4), aus dem die Anordnung der Mitnehmerplatten (6) ersichtlich ist. An beiden Enden der Häckseltrommel (4) sind je ein Axialgebläse (35), (35') angeordnet. Dabei sind auf mit den Stirnseiten des Trommelmantels verbundenen Platten (36), (36') eine beliebige Anzahl Lüfterflügel (37) angeordnet. Die durch eine Öffnung (38), (38') angesaugte Luft (39) wird in Pfeilrichtung (40), (41') in die Verteilerhaube (31) geblasen.

Fig. 5 zeigt die Anordnung der Mitnehmerplatten-Reihen (6) in ihrem schraubenförmigen Verlauf auf dem Trommelmantel. Dabei ist dargestellt, daß jeweils die erste, mit "A" bezeichnete Mitnehmerplatte (6) einer Reihe am Umfang die gleiche WinkelLage hat wie die letzte, mit "B" bezeichnete Mitnehmerplatte der folgenden oder der vorausgehenden Reihe.

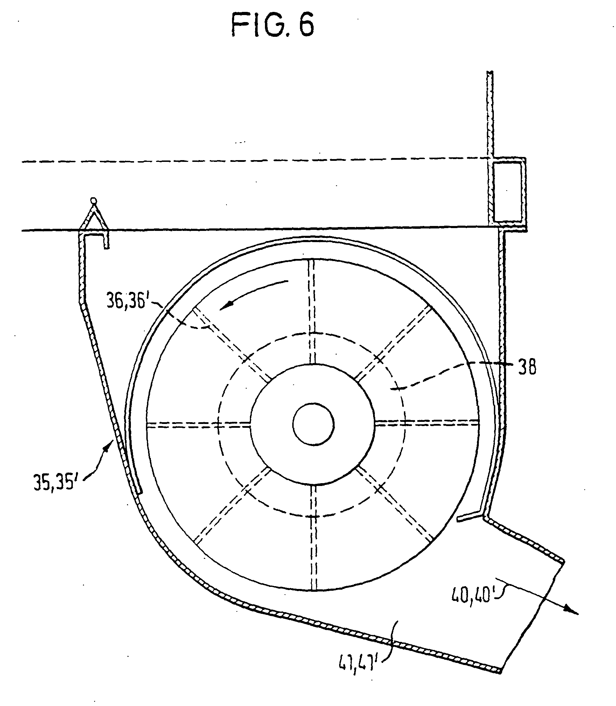

Fig. 6 zeigt einen Querschnitt durch ein Axialgebläse (35, 35'). Dabei wird die über eine Öffnung (38) im Zentrum der Gebläse durch die Lüfterflügel (36), (36') von außerhalb des Häckselkastens angesaugte Luft über einen Austrag (41), (41') in Pfeilrichtung (40), (40') in den Verteilerkasten abgegeben.

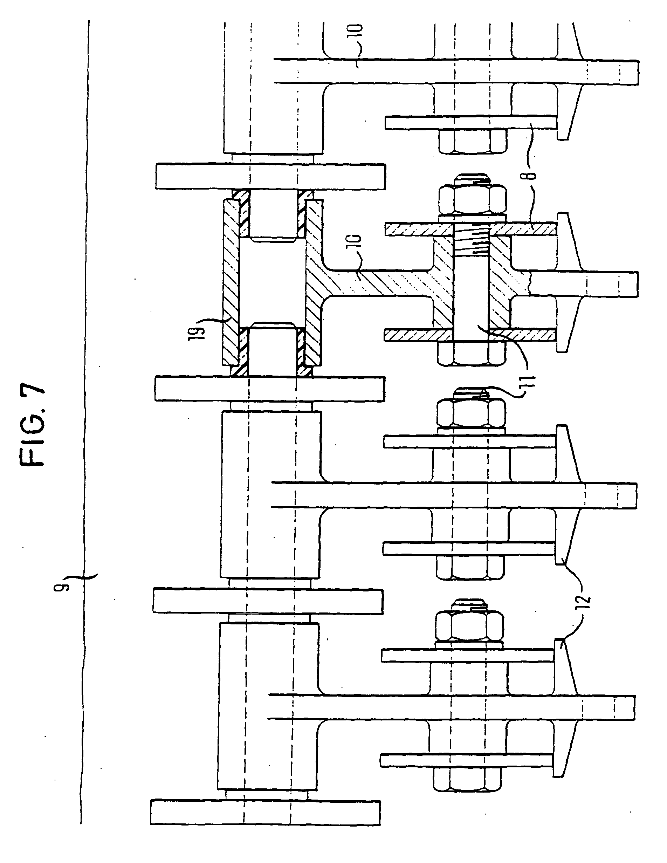

Fig. 7 zeigt eine Ansicht mit einer beispielweisen Gestaltung der Halmgut-Querschneideinrichtung von außerhalb auf den Messerboden (9) in größerem Maßstab. Dabei sind beispielsweise dargestellt die Träger 10, auf denen mittels Schrauben 11 die Häckselmesser (8) starr befestigt sind. Dabei werden die Häckselmesser nach unten durch Anschläge (12) begrenzt. Die Träger (10) wiederum sind auf Bolzen (19) gelagert.

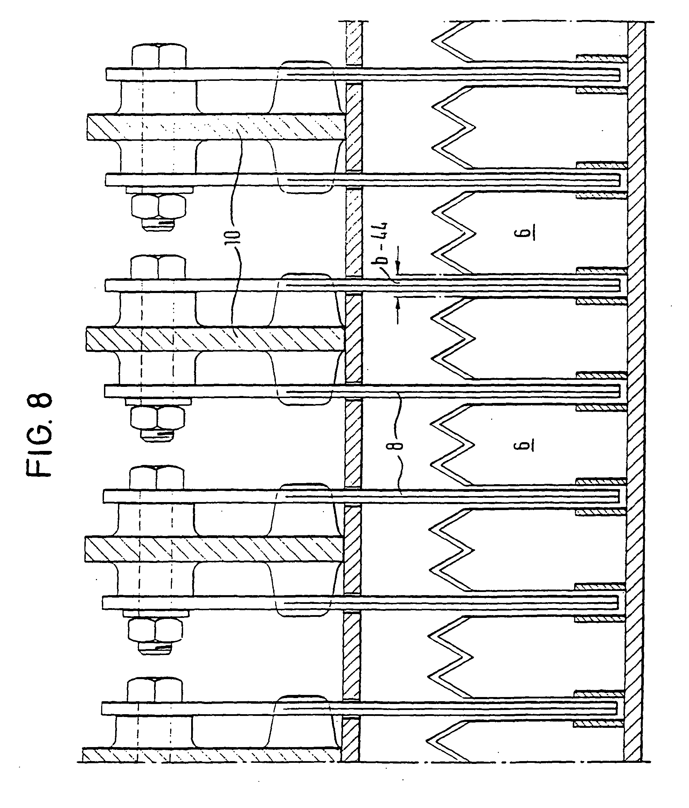

Fig. 8 zeigt eine Draufsicht auf ein beliebiges Segment der Halmgut-Querschneideinrichtung, wobei in vergrößertem Maßstab das Zusammenwirken von Mitnehmerplatten (6) und Häckselmessern (8) dargestellt ist. Dabei ist ersichtlich, wie die Häckselmesser im Spalt b (44) zwischen jeweils nebeneinander liegenden Mitnehmerplatten angeordnet sind.

Fig. 9 zeigt, wie der Halmgut-Querschneideeinrichtung ein Trommelhäcksler (45) nachgeordnet ist. Dabei werden die von den Mitnehmerplatten mitgenommenen, der Länge nach ausgerichteten Halmteile von den Häckselleisten (46) erfasst und im Zusammenwirken mit einer Gegenschneide (47) gekürzt. Die Häckselleisten sind dabei auf einem Trommelmantel quer über die Häckslerbreite spiralförmig angeordnet, wobei eine Trommeileiste den Trommelmantel von einer Seite zur anderen gleich oder größer 360 Grad spiralförmig umschlingt. Das gehäckseite Halmgut wird dann in Pfeilrichtung (47) über einen Verteilerkasten (48) ausgetragen.

Fig. 10 zeigt die Zuordnung von Scheibenradhäckslern (49) hinter den Querschneideeinrichtungen. Dabei wird das in Querlage gehäckselte Halmgut zusammen mit den längsgerichteten, nicht gehäckselten Halmen von den Mitnehmerieisten (6) in Pfeilrichtung (50) durch Öffnungen (51) in die Häckselgehäuse (52) mehrerer neben einander angeordneter Scheibenradhäcksler übergeben. Die auf einer angetriebenen Häckselscheibe (53) befestigten Häckselmesser (54) erfassen die längsgerichteten Halmteile und kürzen diese im Zusammenwirken mit einer Gegenschneide (55). Das gehäckselte Halmgut wird dann in Pfeilrichtung (56) ausgetragen.

## Patentansprüche

1. Strohhäcksler zum Zerkleinern von Halmgut hinter der Kornabscheideeinrichtung eines Mähdreschers, bestehend aus einer Häckseltrommel (4) mit beliebig geformten Mitnehmern oder Schlagmessern (8) auf einem Trommelmantel, die gelagert ist in einem Häckslergehäuse mit Häckslerboden (13), an dem feststehende Gegenmesser angebracht sind, wobei im Zusammenwirken der Mitnehmer oder Schlagmesser mit den Gegenmessern eine Querhäckseleinheit besteht, die überwiegend zum Trennen von im Strohhäcksler querliegenden Halmgut geeignet ist, wobei das gehäckselte Halmgut über eine Verteilerhaube (31) ausgetragen wird, und wobei der Querhäckslereinheit zum Trennen von Halmgut, das längsgerichtet durch den Häcksler geht, ein spezieller Häcksler nachgeordnet ist,
**dadurch gekennzeichnet,**
**daß** zwischen der Querschneideinrichtung und der Verteilerhaube (31) ein Trommelhäcksler (45) mit auf einem Trommelmantel angebrachten Häckselleisten (46) oder mehrere, mindestens zwei Scheibenradhäcksler (49) angeordnet sind.

2. Strohhäcksler nach Anspruch 1, **gekennzeichnet dadurch, daß** die Häckselleisten (46) auf dem Trommelmantel diesen schraubenförmig umschlingend angeordnet sind, wobei die Umschlingung vom Anfang der Häckselleiste (46) auf einer Seite bis zum Ende auf der gegenüberliegenden Seite mindestens 360 Grad beträgt.

3. Strohhäcksler nach Anspruch 1, **gekennzeichnet dadurch, daß** die Scheibenradhäcksler (49) einzeln oder gemeinsam nach unten oder nach oben weggeschwenkt werden können.

4. Strohhäcksler nach einem der vorhergehenden Ansprüche, **gekennzeichnet dadurch, daß** die Querhäckslereinheit derart aufgebaut ist, daß auf dem Mantel einer Häckseltrommel (4) in mehreren Reihen über die Breite der Häckseltrommel (4) mindestens 25mm breite, an der Stirnseite gezahnte Mitnehmerplatten (6) angeordnet sind mit einem Zwischenraumabstand von mindestens 6mm und um dem Umkreis der Spitzen der Mitnehmerplatten (6) auf einer Seite ein bogenförmiger Häckslerboden (13) angeordnet ist, auf dessen Außenseite Häckslermesser (8) befestigt sind, die durch Schlitze im Häckslerboden (13) nach innen bis auf ca. 5mm an den Mantel der Häckseltrommel (4) zwischen die Mitnehmerplatten (6) reichen.

5. Strohhäcksler nach einem der vorhergehenden Ansprüche, **dadurch gekennzeichnet, daß** die gezahnten Mitnehmerplatten (6) lösbar aufgeschraubt sind.

6. Strohhäcksler nach einem der vorhergehenden Ansprüche, **dadurch gekennzeichnet, daß** die Häckselmesser (8) auf einer Messerplatte (20) befestigt sind, die etwa parallel zum Häckslerboden (13) verläuft, wobei die Messerplatte (20) am Häckslerboden (13) in Lagern (14) schwenkbar aufgehängt ist und Schlitze (16, 16') hat, durch die die Häckselmesser (8) durch den Häckselboden (13) in den Häcksler ragen.

7. Strohhäcksler nach einem der vorhergehenden Ansprüche, **dadurch gekennzeichnet, daß** die Häckselmesser (8) auf der Messerplatte (20) auf Messerträgern (10) befestigt sind, die in Lagern (19) schwenkbar sind.

8. Strohhäcksler nach einem der vorhergehenden Ansprüche, **dadurch gekennzeichnet, daß** die Häckselmesser (8) paarweise auf einem Messerträger (10) befestigt sind.

9. Strohhäcksler nach einem der vorhergehenden Ansprüche, **dadurch gekennzeichnet, daß** die Häckselmesser (8) um einen Winkel größer 10 Grad zur Waagrechten, von außen nach innen nach unten verlaufend, angeordnet sind.

10. Strohhäcksler nach einem der vorhergehenden Ansprüche, **dadurch gekennzeichnet, daß** die Messerträger (10) durch Federzug (2) gegen einen Anschlag gegen den Messerboden (13) gezogen werden.

11. Strohhäcksler nach einem der vorhergehenden Ansprüche, **dadurch gekennzeichnet, daß** an beiden Enden der Häckseltrommel (4) mit dieser verbundene Axialgebläse angeordnet sind.

12. Strohhäcksler nach Anspruch 11, **dadurch gekennzeichnet, daß** die beiden Axialgebläse Luft von außerhalb des Häckselkastens ansaugen und in die Verteilerhaube (31) blasen.

## Claims

1. Straw chopper for chopping the stalks after the device for cutting off the ears of corn in a combine harvester, comprising a chopping drum (4) having drivers or impact cutters (8) of any desired shape on a drum casing which is mounted in a chopper housing having a chopper base (13) to which fixed counter-cutters are attached, there being, in interaction of the drivers or impact cutters with the counter-cutters, a transverse chopping unit which is predominantly suitable for chopping stalks lying transversely in the straw chopper, the chopped stalks being discharged via a distributor hood (31), and a special chopper being arranged downstream of the transverse chopper unit for chopping stalks which pass in a longitudinally directed manner through the chopper, **characterized in that** a drum-type chopper (45) having chopping bars (46) or at least two or more disc-wheel choppers (49) are arranged between the transverse cutting device and the distributor hood (31).

2. Straw chopper according to Claim 1, **characterized in that** the chopping bars (46) are arranged on the drum casing in a manner such that they loop around the latter helically, the loop from the beginning of the chopping bar (46) on one side as far as the end on the opposite side being at least 360 degrees.

3. Straw chopper according to Claim 1, **characterized in that** the disc-wheel choppers (49) can be pivoted away downwards or upwards individually or together.

4. Straw chopper according to one of the preceding claims, **characterized in that** the transverse chopper unit is constructed in such a manner that driver plates (6) which are at least 25 mm wide and are toothed on the end side are arranged with a clearance of at least 6 mm on the casing of a chopping drum (4) in a plurality of rows over the width of the chopping drum (4), and a curved chopper base (13) is arranged on one side around the circumference of the tips of the driver plates (6) and has, fastened on its outside, chopping cutters (8) which reach inwards to the casing of the chopping drum (4) between the driver plates (6) by up to approx. 5 mm through slots in the chopper base (13).

5. Straw chopper according to one of the preceding claims, **characterized in that** the toothed driver plates (6) are screwed on detachably.

6. Straw chopper according to one of the preceding claims, **characterized in that** the chopping cutters (8) are fastened on a cutter plate (20) which runs approximately parallel to the chopper base (13), the cutter plate (20) being suspended pivotably in bearings (14) on the chopper base (13) and having slots (16, 16') through which the chopping cutters (8) protrude through the chopper base (13) into the chopper.

7. Straw chopper according to one of the preceding claims, **characterized in that** the chopping cutters (8) are fastened on the cutter plate (20) on cutter carriers (10) which can be pivoted in bearings (19).

8. Straw chopper according to one of the preceding claims, **characterized in that** the chopping cutters (8) are fastened in pairs on a cutter carrier (10).

9. Straw chopper according to one of the preceding claims, **characterized in that** the chopping cutters (8) are arranged running from the outside inwards and downwards by an angle of greater than 10 degrees with respect to the horizontal.

10. Straw chopper according to one of the preceding claims, **characterized in that** the cutter carriers (10) are pulled against a stop against the cutter base (13) by spring tension (2).

11. Straw chopper according to one of the preceding claims, **characterized in that** axial fans which are connected to the chopping drum (4) are arranged at both ends thereof.

12. Straw chopper according to Claim 11, **characterized in that** the two axial fans suck in air from outside the chopping box and blow it into the distributor hood (31).

## Revendications

1. Hache-paille pour broyer la paille derrière le dispositif de séparation des grains d'une moissonneuse batteuse, constitué d'un tambour de hachoir (4) avec des organes d'entraînement ou couteaux de frappe (8) de forme quelconque sur une enveloppe de tambour, qui est logé dans un boîtier de hachoir avec un fond de hachoir (13) sur lequel sont montés des contre-couteaux fixes, où, lors de la coopération des organes d'entraînement ou des couteaux de coupe avec les contre-couteaux, une unité de hachage transversal existe, qui convient essentiellement pour la séparation de paille située transversalement dans le hache-paille, où la paille hachée est évacuée par un capot de distribution (31), et où est disposé en aval de l'unité de hachage transversal, pour la séparation de la paille, qui passe à travers le hachoir en étant orientée longitudinalement, un hachoir spécial,
**caractérisé en ce que** sont disposés entre le dispositif de coupe transversale et le capot de distribution (31) un hachoir à tambour (45) avec des baguettes de hachage (46) montées sur une enveloppe de tambour ou plusieurs, au moins deux hachoirs à roues pleines (49).

2. Hache-paille selon la revendication 1, **caractérisé en ce que** les baguettes de hachage (46) sont disposées sur l'enveloppe du tambour, en enroulant celle-ci à la façon d'une hélice, où l'enroulement depuis le début de la baguette de hachage (46) sur un côté jusqu'à la fin sur le côté opposé est d'au moins 2360 degrés.

3. Hache-paille selon la revendication 1, **caractérisé en ce que** les hachoirs à roues pleines (49) peuvent être amenés à pivoter individuellement ou conjointement vers le bas ou vers le haut.

4. Hache-paille selon l'une quelconque des revendications précédentes, **caractérisé en ce que** l'unité de hachage transversal est réalisée de façon que soient disposées sur l'enveloppe d'un tambour de hachoir (4(), en plusieurs rangées, sur la largeur du tambour de hachoir (4), des plaques d'entraînement (6) d'une largeur d'au moins 25 mm, dentées au côté frontal, avec un écart d'espace intermédiaire d'au moins 6 mm et, sur le pourtour des pointes des plaques d'entraînement (6), sur un côté est disposé un fond de hachoir (13) en forme d'arc, sur le côté extérieur duquel sont fixés des couteaux de hachoir (8), qui s'étendent à travers des fentes dans le fond de hachoir (13) vers l'intérieur jusqu'à environ 5 mm à l'enveloppe du tambour de hachoir (4) entre les plaques d'entraînement (6).

5. Hache-paille selon l'une quelconque des revendications précédentes, **caractérisé en ce que** les plaques d'entraînement (6) dentées sont vissées de façon lâche.

6. Hache-paille selon l'une quelconque des revendications précédentes, **caractérisé en ce que** les couteaux de hachoir (8) sont fixés sur une plaque de couteau (20) qui s'étend à peu près parallèlement au fond de hachoir (13), où la plaque de couteau (20) est accrochée d'une manière pivotante au fond du hachoir (13) dans des paliers (14) et présente des fentes (16, 16'), à travers lesquelles les couteaux de hachoir (8) font saillie à travers le fond de hachoir (13) dans le hachoir.

7. Hache-paille selon l'une quelconque des revendications précédentes, **caractérisé en ce que** les couteaux de hachoir (8) sur la plaque de couteau (20) sont fixés sur des supports de couteau (10) aptes à pivoter dans des paliers (19).

8. Hache-paille selon l'une quelconque des revendications précédentes, **caractérisé en ce que** les couteaux de hachoir (8) sont fixés par paires sur un support de couteau (10).

9. Hache-paille selon l'une quelconque des revendications précédentes, **caractérisé en ce que** les couteaux de hachoir (8) sont disposés selon un angle supérieur à 10 degrés par rapport à l'horizontale, en s'étendant de l'extérieur vers l'intérieur vers le bas.

10. Hache-paille selon l'une quelconque des revendications précédentes, **caractérisé en ce que** les supports de couteau (10) sont tirés par ressort (2) contre une butée contre le fond de couteau (13).

11. Hache-paille selon l'une quelconque des revendications précédentes, **caractérisé en ce qu'**aux deux extrémités du tambour de hachoir (4) sont disposées des souffleries axiales reliées à celui-ci.

12. Hache-paille selon la revendication 11, **caractérisé en ce que** les deux souffleries axiales aspirent l'air depuis l'extérieur du caisson du hachoir et le soufflent dans le capot de distribution (31).
